# DEMANDE DE BREVET EUROPEEN

(11) **EP 1 326 193 A1**
(43) Date de publication de la demande: **09.07.2003**
(21) Numéro de dépôt: 02000025.3
(22) Date de dépôt: 04.01.2002
(51) Int. Cl.: G06K 7/00, H04M 1/02

(54) **Procédé d'exécution d'opérations sur une carte à puce à partir d'un ordinateur relié à un téléphone mobile**

(71) Demandeur: SAGEM S.A., 75015 Paris (FR)
(72) Inventeur: SARRADIN, Jean-Louis, 95190, FONTENAY EN PARISIS (FR)
(74) Mandataire: Schmit, Christian Norbert Marie

(57) **Abrégé**

L'invention concerne un procédé d'exécution d'opérations sur une carte (34) à puce (35) à partir d'un ordinateur (16). Des moyens sont mis en oeuvre afin d'utiliser un téléphone mobile (100) équipé d'un dispositif de lecture de cartes pour effectuer, à partir de l'ordinateur (16) des opérations sur la carte à puce insérée dans le dispositif de lecture. A cet effet, on prévoit notamment une interface pour que les différentes instructions émanant de l'ordinateur soient dans un format exploitable pour un microcontrôleur du téléphone mobile (100).

## Description

La présente invention a pour objet un procédé d'exécution d'opérations sur une carte à puce à partir d'un ordinateur. Plus particulièrement, l'invention concerne un procédé permettant d'effectuer différentes opérations sur une carte de type carte à puce, par exemple à partir d'un ordinateur personnel ou PC, la carte à puce étant insérée dans un dispositif de lecture incorporé dans un terminal, par exemple de type téléphone mobile. Elle a pour but essentiel de rendre possible l'exploitation des diverses fonctionnalités offertes par différents types de cartes à puce existant sans utiliser de lecteur de cartes spécifique, mais en faisant appel à des lecteurs de cartes déjà intégrés dans certains terminaux de télécommunication de type téléphone mobile. Par lecteur de cartes, on désigne des appareils susceptibles d'effectuer des opérations de lecture de données sur la carte, mais également des opérations d'écriture ou encore tout type d'opérations pouvant être effectuées sur des cartes à puce.

D'une façon générale, le domaine de l'invention est celui de la téléphonie mobile associé à celui de la carte à puce. Un téléphone mobile comporte normalement un corps muni d'un circuit électronique permettant d'assurer notamment des fonctions de télécommunication de ce téléphone mobile, et éventuellement de gérer la mise en oeuvre de fonctionnalités connexes à l'utilisation du téléphone mobile dans différentes situations. Un téléphone mobile comporte également un boîtier de batterie qui vient s'encastrer dans le corps du téléphone. Par ailleurs, chaque téléphone mobile comporte, dans le corps ou dans le boîtier, un connecteur d'alimentation pour recharger la batterie quand son énergie est épuisée.

Les téléphones mobiles de la génération actuelle comportent également un connecteur d'embase dans le corps du téléphone. Le connecteur d'embase peut servir dans certains cas à la recharge de la batterie. Par ailleurs, il est possible, via ce connecteur d'embase, de faire communiquer le téléphone mobile avec d'autres dispositifs qui viennent se brancher sur ce connecteur. Notamment, il est possible de relier le téléphone mobile à un micro-ordinateur.

Dans l'état de la technique, on connaît donc la possibilité de raccorder un téléphone mobile à un micro-ordinateur au moyen d'une liaison établie au niveau du connecteur d'embase, ce connecteur disposant d'une connexion série. Ce type de connexion est essentiellement employé pour utiliser le téléphone mobile comme un modem permettant notamment à l'ordinateur de se connecter par exemple à un ordinateur distant notamment via le réseau Internet.

Dans l'état de la technique, on connaît également la possibilité de raccorder un lecteur de cartes spécifique à un ordinateur. Ce lecteur de cartes possède des fonctions spécifiques prédéfinies qui permettent d'effectuer un ensemble d'opérations via l'ordinateur sur les cartes introduites dans le lecteur de cartes. Lorsqu'une telle connexion est réalisée, un standard de communications, dit standard PCSC (Personal Computer Smart Card en anglais), est utilisé pour échanger des données entre le lecteur de cartes et l'ordinateur.

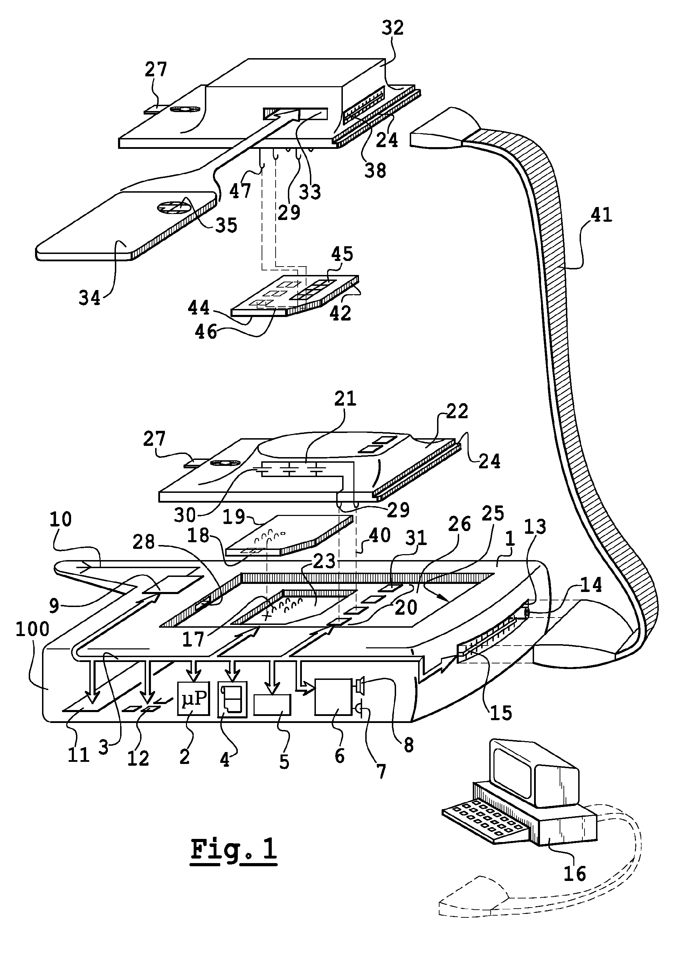

Dans l'état de la technique on connaît par ailleurs des téléphones mobiles équipés de dispositifs de lecture de cartes. De tels téléphones mobiles sont détaillés à la figure 1 qui sera décrite ultérieurement.

Ainsi, dans l'état de la technique, lorsqu'un utilisateur souhaite exécuter des opérations sur des cartes depuis son ordinateur, il est contraint d'utiliser des lecteurs de cartes classiques, dont le comportement est figé, limité à l'exploitation d'une fonctionnalité particulière de la carte à puce. Même lorsqu'un téléphone mobile équipé d'un dispositif de lecture de cartes est connecté à l'ordinateur, les applications du lecteur de cartes du téléphone mobile ne sont pas accessibles depuis l'ordinateur. En effet, le standard de communication habituellement utilisé est le standard PCSC. Or ce standard n'est pas compris par le microprocesseur du téléphone mobile, ou par le microprocesseur d'une éventuelle carte SIM présente au sein du téléphone. Un utilisateur doit donc s'équiper d'un lecteur de cartes spécifique pour pouvoir effectuer des opérations sur la puce d'une carte à puce. De tels lecteurs sont le plus souvent coûteux et ne possèdent pas l'ensemble des capacités d'un téléphone mobile, notamment les capacités de télécommunication sur des réseaux de radiotéléphonie cellulaire.

Le procédé selon l'invention permet de résoudre les problèmes qui viennent d'être exposés. En effet, dans l'invention, des moyens sont mis en oeuvre afin d'utiliser un téléphone mobile équipé d'un dispositif de lecture de cartes pour effectuer des opérations sur une puce d'une carte à puce depuis un ordinateur, par exemple de type ordinateur personnel. A cet effet, le procédé selon l'invention prévoit de rajouter une interface par exemple au niveau de l'ordinateur, de façon à ce que les différentes instructions émanant de l'ordinateur soient dans un format intelligible pour un microcontrôleur du téléphone mobile, ce microcontrôleur étant constitué par le microprocesseur du téléphone mobile et de ses différentes mémoires de programmes et de données. Une autre fonction de l'interface est de convertir les différentes données transmises depuis le téléphone mobile vers l'ordinateur de façon qu'elles soient exploitables par ce dernier.

Des applications de la mémoire de programmes du téléphone mobile permettent ainsi d'interpréter et de transmettre vers le dispositif de lecture de carte les différentes instructions émanant de l'ordinateur.

Dans la présente invention, les cartes à puce considérées peuvent aussi bien être des cartes à microcontrôleur, par exemple des cartes de paiement, que des cartes à mémoire, par exemple des cartes à jeton qui peuvent contenir par exemple un nombre défini d'unités prépayées. Ces cartes peuvent autoriser, pendant une durée donnée, l'accès à certains réseaux, par exemple en débitant petit à petit le nombre d'unités prépayées, et peuvent empêcher l'accès à ces réseaux lorsque le nombre d'unités prépayées restant sur la puce est nul. D'autres types de cartes à puce peuvent être utilisés, notamment des cartes avec des puces réalisant des fonctions particulières, comme par exemple des fonctions de cryptage. Ces fonctions particulières sont contenues dans une mémoire de programmes de la carte à puce.

L'invention concerne donc un procédé d'exécution d'opérations sur une carte à puce à partir d'un ordinateur, ladite carte à puce pouvant être introduite dans une ouverture d'un boîtier d'un terminal mobile, le terminal mobile comportant notamment un circuit amovible de contrôle, ou micromodule SIM, ledit boîtier comportant un lecteur de cartes à puce, caractérisé en ce qu'il comporte les différentes étapes consistant à :
- établir une liaison série entre un connecteur du terminal mobile et l'ordinateur ;
- disposer une interface sur la liaison série ;
- émettre des instructions selon un premier standard, depuis l'ordinateur, ces instructions correspondant à des opérations à effectuer au sein de la carte à puce ;
- convertir, au sein de l'interface, les instructions dans un deuxième standard intelligible par la carte à puce.

Dans un mode de mise en oeuvre particulier, les étapes suivantes sont intégrées dans le procédé selon l'invention :
- transmission des instructions converties au terminal mobile via la liaison série;
- utilisation, au sein du terminal mobile, d'applications de gestion du lecteur interne de carte à puce pour exécuter les instructions.

Dans un mode de réalisation particulier, l'interface est disposée sur l'ordinateur. Dans le cas où une opération de lecture a été exécutée, on transmet depuis le terminal mobile, via la liaison série, les données lues sur la carte à puce.

Dans un mode de mise en oeuvre particulier de l'invention, l'étape de transmission des instructions converties est réalisée soit via une liaison supplémentaire fonctionnelle, soit via un circuit de liaison relié à un micromodule.

Dans un autre mode de mise en oeuvre particulier, l'étape de conversion au sein de l'interface comprend une opération consistant à ajouter un code spécifique aux instructions converties pour désigner un destinataire des instructions.

Le terminal mobile utilisé peut être un terminal mobile monétique, et le connecteur du terminal mobile peut être un connecteur série.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, un téléphone mobile équipé d'un lecteur de carte, connu dans l'état de la technique, pouvant être utilisé pour la mise en oeuvre du procédé selon l'invention;
- à la figure 2, une représentation schématique des différents éléments intervenant dans le procédé selon l'invention.

La figure 1 montre un téléphone mobile, connu dans l'état de la technique, qui peut être utilisé dans le procédé selon l'invention. On pourrait cependant utiliser d'autres exemples de terminaux mobiles, notamment des terminaux dont un dispositif de lecture de cartes à puce est agencé de façon différente avec le terminal considéré, cet agencement pouvant être interne ou externe à un boîtier comportant une batterie.

Sur cette figure, un téléphone mobile 100 comporte un corps 1 muni de circuits électroniques 2 à 15 destinés à son fonctionnement. De façon simplifiée, ces circuits électroniques comportent un microprocesseur 2 relié par un bus de communication bidirectionnel 3 à une mémoire de programmes 4, à une mémoire de données 5 et à des circuits 6 de traitement des signaux de parole. Les circuits 6 sont reliés du manière symbolique un microphone 7 et à un haut-parleur 8 du téléphone mobile 100. Les différents circuits électroniques du bloc 1 sont reliés par ailleurs à un dispositif d'émission-réception 9, lui-même relié à une antenne 10. Ils sont également reliés à un ensemble de périphériques. Parmi ces périphériques, on distingue de manière connue un écran 11, des boutons de commande 12 et le plus souvent un connecteur d'embase 13.

Le connecteur d'embase 13 est constitué d'un dispositif de connexion complexe permettant différents types d'utilisation. Par exemple, un connecteur 14 de type coaxial est compris dans le connecteur d'embase 13 pour éventuellement relier le téléphone mobile 100 à une antenne extérieure, par exemple une antenne de voiture. Un connecteur standardisé 15 permet de relier le téléphone mobile 100 à différents périphériques ou appareils électroniques, notamment à un micro-ordinateur 16. Le bus 3 permet également d'échanger des informations via ce connecteur 15.

Le téléphone mobile, par exemple de type GSM, possède par ailleurs un connecteur interne 17 dans le corps 1, relié au bus 3, et qui est destiné à rentrer en communication avec des métallisations 18 d'un circuit électronique amovible de contrôle 19. Ce circuit amovible de contrôle est un circuit dit micromodule SIM pour Secure Identification Module ( module d'identification sécurisé). Le bus 3 est par ailleurs en relation avec un connecteur d'alimentation interne 20 destiné à recevoir une distribution électrique produite par une batterie 21 contenue dans un boîtier 22. Le micromodule SIM 19 est le plus souvent situé dans un logement 23 disposé à la surface interne du corps 1, la surface interne étant définie comme celle en contact avec le boîtier 22 lorsque celui-ci est solidarisé avec le corps 1.

Le boîtier 22 comportant notamment la batterie 21 est amovible. Dans ce but, il peut comporter par exemple d'un coté une griffe 24 destiné à s'agripper dans une cavité 25 d'un réceptacle 26 ménagé dans le corps 1. A une autre extrémité, le boîtier 22 possède un loquet 27 destiné à s'engager dans un trou 28 réalisé sur un chant du réceptacle 26. Lorsque le boîtier amovible 22 est en place, solidarisé avec le corps 1, des palpeurs électriques 29 reliés à des éléments 30 d'alimentation de la batterie 21 viennent en contact de métallisations 31 du connecteur d'alimentation interne 20.

Les opérations de mise à jour et d'entretien d'un tel téléphone mobile sont particulièrement simples. Il suffit d'ouvrir le loquet 27, et de basculer le boîtier 22 autour de la griffe 24 pour l'extraire du réceptacle 26. On a alors accès au micromodule SIM 19 pour le changer.

Au fil des années, des besoins marginaux sont apparus pour les téléphones mobiles. En effet, on a voulu utiliser au maximum leurs capacités de télécommunication, et exploiter des réseaux de radiotéléphonie cellulaire que leur développement avait contribué à améliorer. On a ainsi vu apparaître, par exemple, des téléphones mobiles dits monétiques. Ces téléphones mobiles sont en fait des téléphones qui sont constitués d'un corps 1 tel que décrit à la figure 1, associé à un nouveau boîtier intégrant un lecteur de cartes à puce, et qui permettent d'effectuer des opérations de paiement. Plus généralement, des téléphones composés d'un corps 1 et de nouveaux boîtiers 32, équipés d'un dispositif de lecture de cartes, sont apparus. Comme le boîtier 22, le nouveau boîtier 32 a toujours une fonction d'alimentation du corps 1. Il comporte toujours les palpeurs électriques 29 destinés à entrer en relation avec les métallisations 31 du connecteur d'alimentation interne 20. Ce boîtier 32 comporte également toujours le loquet 27 et les griffes 24 pour se fixer sur le corps 1.

Dans le boîtier 32, une ouverture 33 est prévue pour introduire une carte 34 à puce 35. Un dispositif électronique de lecture de cartes, non représenté, est prévu dans le nouveau boîtier 32 ; ce dispositif comporte par ailleurs un connecteur du même type que le connecteur 17.

Dans ce type de téléphone, le nouveau boîtier 32 n'est pas que plaqué sur l'arrière du corps 1 du téléphone mobile 100. Le boîtier 32 n'a pas comme unique fonction de procurer l'énergie nécessaire au téléphone mobile 100 au moyen de la batterie 21. En effet, dans ce type de téléphone mobile, des informations traitées au sein d'un dispositif de lecture de cartes sont destinées à être transmises aux, ou reçues des, circuits électroniques 2-15 du corps 1. Dans ce but un connecteur fonctionnel 38 du boîtier 32 est raccordé à un connecteur fonctionnel, par exemple le connecteur normalisé 15, du corps 1. Ainsi, en plus d'une liaison 40, classique, résultant de la mise en contact des palpeurs 29 avec les métallisations 31 du connecteur d'alimentation interne 20, on réalise une liaison supplémentaire fonctionnelle 41.

Dans un mode de réalisation particulier, la griffe 24 du nouveau boîtier 32 peut être munie de moyens pour se connecter à des broches non représentées qui apparaissent à proximité du connecteur 15, au niveau de la cavité 24. Dans un autre mode de réalisation, le connecteur fonctionnel 38 est disposé à l'intérieur du boîtier 32 et vient se connecter au niveau des broches apparaissant à proximité du connecteur 15 au moyen d'un circuit flexible constituant alors la liaison fonctionnelle 41. Le bus de communication 3 a accès aux informations arrivant au niveau de ces broches. Dans cette réalisation, la liaison 41 n'est plus externe, et elle n'est donc plus visible lorsque le corps 1 et le boîtier 32 sont solidarisés. Ce dernier mode de réalisation est préféré pour la mise en oeuvre du procédé selon l'invention, car il laisse disponible le connecteur normalisé 15 pour recevoir une éventuelle autre liaison, par exemple avec l'ordinateur 16.

Dans un autre mode de réalisation, le plus souvent dans le cadre d'une utilisation en téléphonie de type GSM, lorsqu'un micromodule SIM 19 est utilisé, on peut procéder d'une autre façon. On peut par exemple remplacer le micromodule 19 par un circuit de liaison 42. Le circuit de liaison 42 a mécaniquement la même dimension que le micromodule 19. Il comporte par exemple une plaquette de circuit imprimé double face. Ce circuit imprimé possède sur une face, ici non visible, des métallisations 44 disposées conformément à la disposition des métallisations 18 du micromodule 19. Sur une autre face il comporte des métallisations 45. En interne, dans le corps du circuit de laison 42, des connexions 46 sont réalisées pour relier les métallisations 45 individuellement aux métallisations 44. Les métallisations 45 du circuit de liaison 42 apparaissent en un endroit de cette dernière qui est visible et accessible dans le réceptacle 26.

Dans ce cas, le boîtier 32 comporte des palpeurs 47 pour venir se connecter sur les métallisations 45 lorsque le boîtier 32 est engagé dans le corps 1 au-dessus de la plaquette 42. Le boîtier 32 comporte alors un logement pour y introduire le micromodule SIM 19.

D'autres modes de réalisation de boîtiers 32, équipés d'un dispositif de lecture de cartes, sont possibles. On peut notamment réaliser des circuits flexibles pour assurer la connexion entre les palpeurs 47 et le micromodule 19. On peut également prévoir un boîtier 32 pour lequel il n'est pas prévu de lecteur interne de carte à puce, mais qui offre la possibilité d'être relié à un tel lecteur, par exemple par une connexion physique de type cablée, ou par une connexion à distance fonctionnant par transmission de données par exemple selon le protocole dit bluetooth. Tous les modes de réalisation envisageables du boîtier 32 ont pour objectif essentiel la transmission d'informations entre le dispositif de lecture de cartes à puce et les circuits électroniques 2 à 15 du corps 1. Des applications de gestion du fonctionnement du dispositif de lecture de carte peuvent être contenues soit dans le micromodule SIM 19, ces applications dépendant alors d'un opérateur de radiotéléphonie cellulaire, soit dans le corps 1 du téléphone mobile 100, soit dans le boîtier 32.

Lorsque les applications sont contenues dans le corps 1 ou dans le boîtier 32, elles peuvent évoluer au moyen d'une mise à jour locale ou distante. Ce type de mise à jour peut par exemple être effectuée localement via la liaison série (200) du mobile, ou à distance en utilisant des messages de type SMS (Short Message Service en anglais), essentiellement lorsque seuls certains paramètres de ces applications sont à modifier, ou en utilisant un service de transmission de données par paquets de type GPRS (General Packet Radio Service en anglais). Les applications, dans le cas où elles sont contenues dans le boîtier 32, peuvent également être figées, leur évolution étant toujours possible lors d'un changement de boîtier 32.

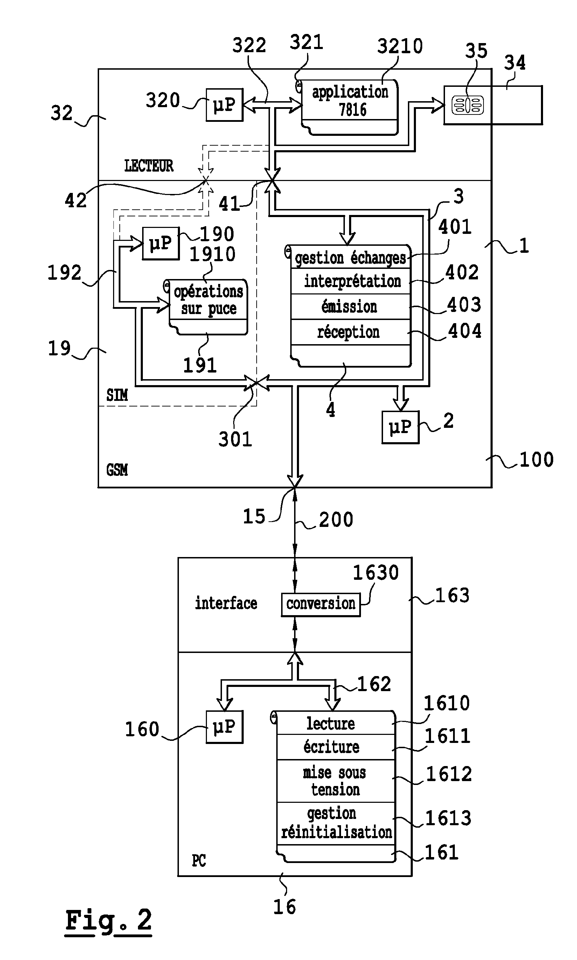

Le fonctionnement du procédé selon l'invention est à présent expliqué, notamment au moyen de la figure 2.

Sur cette figure, on retrouve l'ordinateur de type ordinateur personnel 16, le terminal de type téléphone mobile 100 composé du corps 1 et du boîtier 32, le micromodule SIM 19 et une carte 34 à puce 35 inséré dans le boîtier 32. Seuls les éléments intervenant effectivement dans la mise en oeuvre du procédé selon l'invention sont représentés sur la figure 2. Ainsi, dans l'ordinateur 16, seuls sont représentés un microprocesseur 160, une mémoire de programmes 161 et un bus de communication 162. Dans le boîtier 1, on retrouve le microprocesseur 2, qui sera désigné comme étant le microprocesseur du téléphone mobile, le bus de communication 3 et la mémoire de programmes 4. Dans le micromodule SIM 19 on trouve notamment un microprocesseur 190, une mémoire de programmes 191 et un bus de communication 192. Dans le boîtier 32 on trouve essentiellement un microprocesseur 320, une mémoire de programmes 321 et un bus de communication 322, ces trois éléments constituant un dispositif de lecture de cartes à puce. Le terme dispositif de lecture désigne en fait un dispositif capable d'effectuer toutes les opérations envisageables sur la carte à puce, et pas seulement les opérations de lecture.

Dans un exemple de mise en oeuvre du procédé selon l'invention, on a équipé l'ordinateur 16 d'une interface 163. L'interface 163 aurait très bien pu être disposée sur le téléphone mobile 100, ou tout simplement disposée sur une liaison permettant l'échange d'informations entre l'ordinateur 16 et le téléphone mobile 100, de façon à recevoir directement les données issues ou destinées à l'ordinateur 100. La mémoire de programmes 161 contient notamment différentes applications qui correspondent à différentes instructions du standard PCSC. On trouve ainsi une application dite de lecture 1610, une application dite d'écriture 1611, une application dite de gestion de la mise sous tension 1612 et enfin une application dite de gestion des opérations de réinitialisation 1613.

Le standard PCSC est susceptible d'évoluer et de faire intervenir de nouvelles applications qui seront traitées de la même façon que les quatre applications mentionnées lors de la mise en oeuvre du procédé selon l'invention. Les différentes applications du standard PCSC sont habituellement utilisées lorsque l'ordinateur 16 est connecté directement à un lecteur de cartes connu de l'état de la technique. Elles permettent de réaliser l'ensemble des opérations qu'il est envisageable d'effectuer sur une carte à puce. Le microprocesseur 160 gère la mise en oeuvre de ces différentes applications, conformément à des commandes provenant par exemple d'un utilisateur. D'une façon générale, dans d'autres modes de réalisation, les différentes applications, intervenant dans la mise en oeuvre du procédé selon l'invention, présentes dans une mémoire de programmes, auraient pu être remplacées par des circuits électroniques spécifiques.

Lorsque l'une de ces applications est active, différentes informations sont transmises via le bus de communication 162 à l'interface 163, et plus particulièrement à un circuit, ou une application, de conversion 1630. Le circuit de conversion 1630 a pour fonction de transformer les instructions émises par l'ordinateur 16 selon le standard PCSC en un format exploitable par le microprocesseur 2 du téléphone mobile 100. Une fois les instructions converties, elles sont transmises via une liaison série 200 au téléphone mobile 100. La liaison série 200 est reliée au téléphone mobile 100 au niveau du bus de communication 3 par une interface. Dans un exemple préféré, cette interface est le connecteur 15 du connecteur d'embase 13.

Les différentes informations sont alors prises en charge par le microcontrôleur constitué du microprocesseur 2 et de la mémoire de programmes 4 du téléphone mobile 100. A cet effet, la mémoire de programmes 4 comprend notamment différentes applications pouvant intervenir dans le procédé selon l'invention. On trouve ainsi une application 401, dite application de gestion des échanges de données entre la carte à puce 34 et l'ordinateur 16, une application dite d'interprétation 402, une application d'émission de données 403 et une application de réception de données 404. L'application de gestion des échanges 401 a pour principale fonction d'identifier la provenance des instructions et/ou des données. Cette étape d'identification permet ensuite d'orienter les informations vers le bon destinataire, c'est à dire soit le dispositif de lecture de cartes du boîtier 32, soit l'ordinateur 16, soit éventuellement le micromodule 19. Une fois identifiées, les différentes données sont prises en charge par l'application d'interprétation 402 qui a pour fonction principale de reconnaître l'instruction à effectuer afin de déclencher l'opération appropriée au sein du dispositif de lecture de cartes du boîtier 32. Des instructions de commande appropriées sont alors transmises au dispositif de lecture. A cet effet, l'application d'émission 403 est utilisée. L'application de réception 404 intervient essentiellement lorsque des données ont été lues dans la carte à puce et qu'elles doivent être transmises vers l'ordinateur 16.

Les différentes informations relatives aux opérations effectuées ou à effectuer sur la carte à puce transitent entre le bus de communication 3 du corps 1 et le bus de communication 322 du dispositif de lecture contenu dans le boîtier 32 au niveau de la liaison 41.

Le dispositif de lecture de cartes est en mesure d'échanger des données avec la carte à puce qui dispose également d'un bus de communication, d'un microprocesseur et des mémoires de programmes non représentés. Des applications 3210 de la mémoire de programmes 321 sont mises en oeuvre au sein du dispositif de lecture afin d'exécuter les différentes opérations venant de l'ordinateur 16. Ces différentes applications sont des applications dites 7816, en référence à la norme ISO7816 qui définit le jeu de commande à adresser pour pouvoir échanger des données avec une carte à puce.

Dans un autre mode de mise en oeuvre du procédé selon l'invention, on utilise le micromodule 19 pour échanger des informations entre la carte 34 à puce 35 et l'ordinateur 16. Dans le micromodule 19, la mémoire de programmes 191 comporte à cet effet un ensemble d'applications 1910, dites applications d'opération sur la puce, qui permettent, via une interface entre le bus de communication 192 et le bus de communication 322, d'envoyer des instructions de déclenchement des applications 7816 3210. Cette interface peut par exemple être réalisée au moyen du circuit de liaison 42 décrit à la figure 1. Ainsi, dans un mode de mise en ouvre particulier du procédé selon l'invention, une interface 301 entre le bus de communication 3 du corps 1 et le bus de communication 192 du micromodule 19 est prévu pour transmettre des instructions depuis l'ordinateur 16 au dispositif de lecture du boîtier 32 via le micromodule 19. C'est l'application 401 de gestion des échanges d'informations qui gère ce transfert d'informations, par exemple suite à la détection d'un code spécifique dans les informations transmises par le circuit de conversion 1630, ou de façon automatique lorsqu'il n'existe pas de liaison fonctionnelle 41. L'avantage d'une telle solution est qu'on peut facilement modifier les applications contenues dans le micromodule 19 en remplaçant celui-ci par un nouveau micromodule comme il l'a été précédemment expliqué.

Lorsque des données sont lues sur la carte à puce, elles peuvent être transmises via le bus de communication 322 puis via le bus de communication 3 au moyen de l'application de réception 404, puis via la liaison série 200 à l'interface 163. Le circuit de conversion 1630 est alors mis en oeuvre de façon inverse à son fonctionnement lorsque des instructions sont émises depuis l'ordinateur 16, pour transmettre des données à l'ordinateur 16, ces données étant par exemple destinées à être mémorisées dans une mémoire de données non représentée.

Le procédé selon l'invention permet à un utilisateur d'accéder, de façon simple, sans lecteur de cartes spécifique, aux différentes fonctionnalités que peuvent proposer les différents types de cartes à puce. Ainsi, grâce au procédé décrit, on peut par exemple accéder à une clé secrète contenue dans une mémoire d'une carte à puce, cette clé secrète permettant de se connecter à un ordinateur distant, et les opérations d'accès à cette clé étant exécutées via un lecteur de cartes à puce rattaché au téléphone mobile 100.

## Revendications

1. Procédé d'exécution d'opérations sur une carte (34) à puce (35) à partir d'un ordinateur (16), ladite carte (34) à puce (35) pouvant être introduite dans une ouverture (33) d'un boîtier (32) d'un terminal mobile (100), le terminal mobile (100) comportant notamment un circuit amovible de contrôle, ou micromodule SIM (19), ledit boîtier (32) comportant un lecteur (320 ;321 ;322) de cartes à puce, **caractérisé en ce qu'**il comporte les différentes étapes consistant à :
- établir une liaison série (200) entre un connecteur (15) du terminal mobile (100) et l'ordinateur (16);
- disposer une interface (163) sur la liaison série (200) ;
- émettre des instructions selon un premier standard, depuis l'ordinateur (16), ces instructions correspondant à des opérations à effectuer au sein de la carte (34) à puce (35);
- convertir, au sein de l'interface (163), les instructions dans un deuxième standard intelligible par la carte (34) à puce (35).

2. Procédé selon la revendication précédente **caractérisé en ce qu'**il comporte les étapes supplémentaires consistant à :
- transmettre les instructions converties au terminal mobile (100) via la liaison série (200);
- utiliser, au sein du terminal mobile (100), des applications de gestion (3210) du lecteur de carte à puce pour exécuter les instructions.

3. Procédé selon l'une des revendications précédentes **caractérisé en ce qu'**il comporte, dans le cas où une opération de lecture a été exécutée, l'étape supplémentaire consistant à :
- transmettre depuis le terminal mobile (100), via la liaison série (200), les données lues sur la carte (34) à puce (35).

4. Procédé selon l'une des revendications 2 ou 3 **caractérisé en ce que** l'étape de transmission des instructions converties est réalisée via une liaison supplémentaire fonctionnelle (41).

5. Procédé selon l'une des revendications 2 à 3 **caractérisé en ce que** l'étape de transmission des instructions converties est réalisée via un circuit de liaison (42) relié à un micromodule (19).

6. Procédé selon l'une des revendications précédentes **caractérisé en ce que** l'étape de conversion au sein de l'interface (163) comprend une opération consistant à ajouter un code spécifique aux instructions converties pour désigner un destinataire des instructions.
